# EUROPEAN PATENT APPLICATION

(11) **EP 4 068 826 A1**
(43) Date of publication of application: **05.10.2022**
(21) Application number: 22165588.9
(22) Date of filing: 30.03.2022
(51) Int. Cl.: H04W 12/122, H04W 4/30, H04W 12/00

(54) **DISTRIBUTED TRUST BETWEEN MOBILE COMPUTERS**

(30) Priority: 31.03.2021 FI 20215389
(71) Applicant: Nokia Technologies Oy, 02610 Espoo (FI)
(72) Inventor: OLIVER, Ian Justin, Söderkulla (FI); SIGNORINI, Matteo, Palaiseau (FR); PONTECORVI, Matteo, Palaiseau (FR)
(74) Representative: Nokia EPO representatives

(57) **Abstract**

Method, apparatus, and computer program are disclosed for operating drones or other mobile computers in sensitive environments, where the drones are exposed to attacks with updates, incorrect/malicious commands or even being joined by malicious drones pretending to be part of the drone swarm or group. The method includes leveraging both trusted computing capabilities and that each individual drone can decide on the level of assurance and trust of any other drone we can construct a consensus algorithm such that if a drone wishes to perform a sensitive operation then all drones can attest that drone and decided on its level of assurance.

## Description

### TECHNICAL FIELD

Various example embodiments relate to distributed trust between mobile computers.

### BACKGROUND

This section illustrates useful background information without admission of any technique described herein representative of the state of the art.

Mobile computers and particularly drones may operate in very sensitive environments, such as in border patrol. In such environments, the drones may be attacked with falsified updates, incorrect/malicious commands or even be joined by malicious drones pretending to be part of a drone swarm or group. Notably, drones on longer missions may require updating their firmware, guidance, and operations during mission time.

It is desirable to allow new drones to join in a swarm or updates being made in the operation of the drones also even without connectivity any central stations.

### SUMMARY

The scope of protection sought for various embodiments of the invention is set out by the independent claims. The embodiments and features, if any, described in this specification that do not fall under the scope of the independent claims are to be interpreted as examples useful for understanding various embodiments of the invention.

According to a first example aspect of the present invention, there is provided a method in a mobile computer, comprising:
maintaining a local copy of a distributed blockchain that is shared by a group of state machine replication protocol members;
according to the state machine replication protocol, identifying a leader of the group of state machine replication protocol members;
according to the state machine replication protocol, assuming a role of a rank member, the method further comprising performing in the rank member role at least:
wirelessly receiving a command or operation request from a requester and responsively wirelessly transmitting the request to the leader;
wirelessly receiving from the leader an assessment matrix defining a plurality of attesters that are different members of the group and one or more requesters, when being one of the plurality of attesters;
locally assessing each of the requesters of the assessment matrix based on local knowledge of the requesters;
according to the state machine replication protocol, attempting wirelessly exchanging with all other attesters of the matrix corresponding local assessments of each requester;
according to the state machine replication protocol, locally computing group trust assessments for each requester of the assessment matrix based on all obtained local assessments of each requester;
attempting to wirelessly exchange the locally computed group trust assessments with all other attesters;
defining a global assessment for each requester of the assessment matrix based on all obtained group trust assessments; and
appending the global assessment for each requester to the blockchain.

The appending the global assessment may comprise appending the global assessment for each requester to a local copy of the blockchain.

The local assessments may be values computed using a ruleset. The ruleset may be defined in the closed blockchain. The ruleset may combine parameters of different types or units using feature scaling. The ruleset may refer to an appraisal policy for evidence or to an appraisal policy for attestation results. One attester may have same or different ruleset than another attester. A common ruleset may be used. The common ruleset may be written in the blockchain, e.g., for protecting the integrity of the ruleset applied by the attesters.

The local assessment may be based on a manufacturer of the requester. The local assessment may be based on that whether the requester has a same manufacturer with the attester. The local assessment may be based on an operating system of the requester. The local assessment may be based on that whether the requester has a same operating system with the attester. The local assessment may be based on one or more internal factors. The local assessment may be based on one or more external factors.

The group trust assessment may refer to local assessments being computed and shared during the protocol.

The blockchain may be a permissioned blockchain. The method may further comprise authenticating to the blockchain. The blockchain may have as its permitted members a group of state machine replication protocol members. Alternatively, the blockchain may be a permissionless blockchain.

The method may further comprise granting or refusing the request of the requester depending on the global assessment.

The local assessment may be defined as a numeric value. The local assessment may be defined as a Boolean value. The global assessment may be defined as a numeric value. The global assessment may be defined as a Boolean value.

The state machine replication protocol may be a practical byzantine fault tolerant protocol, PBFT. The state machine replication protocol may be based on Quorum. The state machine replication protocol may be based on Multichain. In an example embodiment, regardless of the chosen state machine replication protocol, a global trust assessment is decided if consensus is reached on a decided ruleset.

The global assessment may be formed using at least a statistical characterization function. The statistical characterization function may be average. The statistical characterization function may be a mean function. The statistical characterization function may be logarithmic average function. The statistical characterization function may be a root mean square function.

The global assessment may be defined as a value between a minimum and maximum. The granting of the request may be performed if the global assessment meets or exceeds a given threshold. The threshold may be 50 % between the minimum and maximum. The threshold may be 2/3 of the range between the minimum and maximum. The threshold may be increased for given requests. The threshold may be lowered for given requests.

The method may further comprise updating locally maintained global assessment for each requester of the assessment matrix according to the global assessment.

According to a second example aspect of the present invention or as an addition to the first example aspect, there is provided a method in a mobile computer, comprising:
authenticating to a permissioned and distributed blockchain that has as its permitted members a group of state machine replication protocol members;
according to the state machine replication protocol, assuming a role of a leader of the group of state machine replication protocol members and performing in the leader role at least:
wirelessly collecting from other members of the group one or more requests for a command or operation request originating from one or more requesters and wirelessly transmitted to the other members of the group;
forming an assessment matrix defining a plurality of attesters that are different members of the group and one or more requesters;
providing the assessment matrix wirelessly to other attesters and using the assessment matrix locally as one of the attesters;
locally assessing each of the requesters of the assessment matrix based on local knowledge of the requesters;
according to the state machine replication protocol, attempting wirelessly exchanging with all other attesters of the matrix corresponding local assessments of each requester;
according to the state machine replication protocol, locally computing group trust assessments for each requester of the assessment matrix based on all obtained local assessments of each requester;
attempting to wirelessly exchange the locally computed group trust assessments with all other attesters;
defining a global assessment for each requester of the assessment matrix based on all obtained group trust assessments; and
appending the global assessment for each requester to the closed blockchain.

The mobile computer may operate in the rank member role at one point of time and in a leader role at another point of time.

The mobile computer may be or comprise or be comprised by a drone.

The mobile computer may be or comprise or be comprised by a vehicle.

The mobile computer may be or comprise or be comprised by a robot.

The mobile computer may be autonomously mobile.

According to a third example aspect of the present invention, there is provided a method for operating drones or other mobile computers in sensitive environments, where the drones may be attacked with updates, incorrect/malicious commands or even be joined by malicious drones pretending to be part of the drone swarm or group.

The method may include leveraging both trusted computing capabilities and that each individual drone can decide on the level of assurance and trust of any other drone. We can construct a consensus algorithm such that if a drone wishes to perform a sensitive operation then all drones can attest that drone and decide on its level of assurance.

According to a fourth example aspect of the present invention, there is provided a computer program comprising computer executable program code configured to execute any preceding example aspect.

The computer program may be stored in a computer readable memory medium.

Any foregoing memory medium may comprise a digital data storage such as a data disc or diskette, optical storage, magnetic storage, holographic storage, optomagnetic storage, phase-change memory, resistive random access memory, magnetic random access memory, solid-electrolyte memory, ferroelectric random access memory, organic memory, or polymer memory. The memory medium may be formed into a device without other substantial functions than storing memory or it may be formed as part of a device with other functions, including but not limited to a memory of a computer, a chip set, and a sub assembly of an electronic device.

According to a fifth example aspect of the present invention, there is provided an apparatus comprising a memory and a processor that are configured to cause the apparatus to perform the method of any example aspect.

According to a sixth example aspect of the present invention, there is provided an apparatus comprising means for performing the method of any example aspect.

Different non-binding example aspects and embodiments of the present invention have been illustrated in the foregoing. The embodiments in the foregoing are used merely to explain selected aspects or steps that may be utilized in implementations of the present invention. Some embodiments may be presented only with reference to certain example aspects of the invention. It should be appreciated that corresponding embodiments may apply to other example aspects as well.

### BRIEF DESCRIPTION OF THE DRAWINGS

For a more complete understanding of example embodiments of the present invention, reference is now made to the following descriptions taken in connection with the accompanying drawings in which:
Fig. 1 shows an architectural drawing of a system of an example embodiment;
Fig. 2 shows a flow chart of various features of a process of an example embodiment in a mobile computer;
Fig. 3 shows a flow chart of various features of a process of different example embodiments in a mobile computer;
Fig. 4 shows a flow chart of various features of a process of different example embodiments in a mobile computer; and
Fig. 5 shows a block diagram of an apparatus of an example embodiment.

### DETAILED DESCRIPTON OF THE DRAWINGS

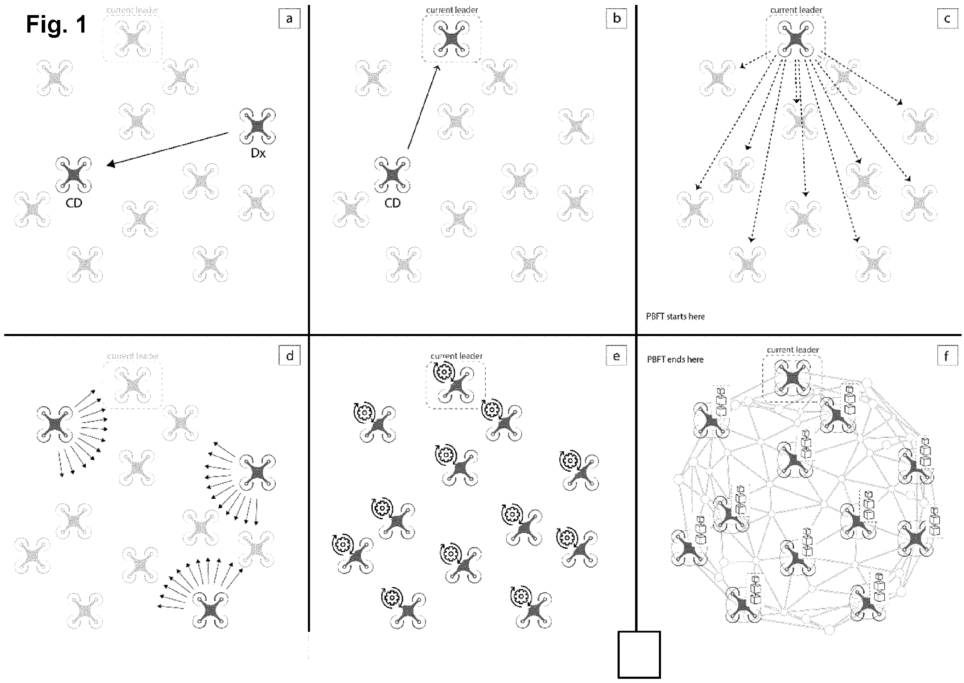

An example embodiment of the present invention and its potential advantages are understood by referring to Figs. 1 through 5 of the drawings. In this document, like reference signs denote like parts or steps.

Fig. 1 shows an architectural drawing of a system of an example embodiment. In Fig. 1, a number of mobile computers, such as drones, are schematically shown as a group. In an example embodiment, the mobile computers are capable of wireless communications with each other, e.g., within a given range that allows the group to communicate at least when relatively close to each other.

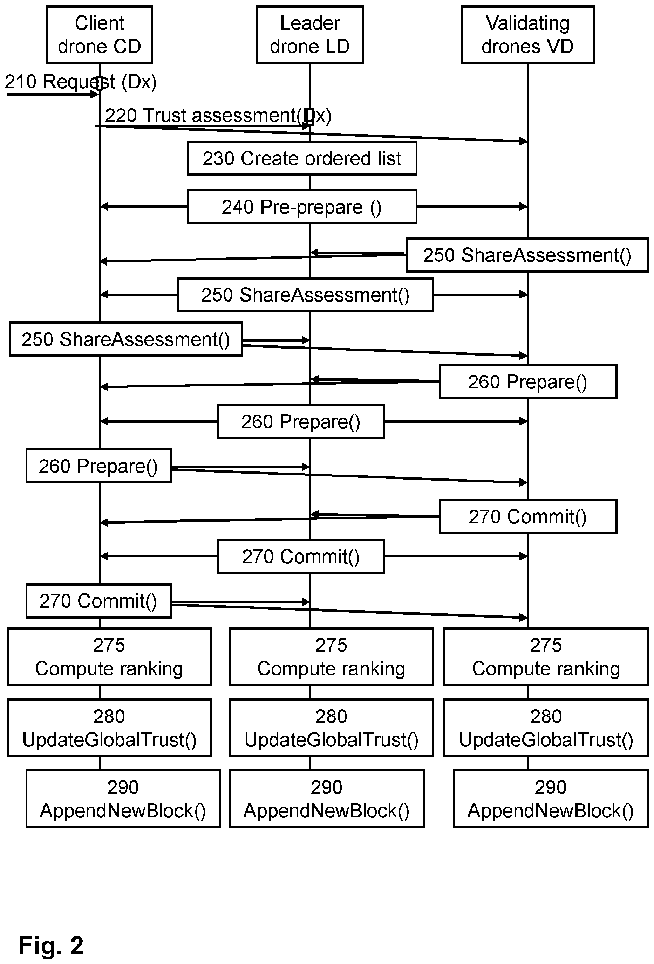

Fig. 2 shows a flow chart of various features of a process of an example embodiment in a mobile computer to assess trustworthiness of a requester of some command or service. Fig. 2 is uses drones as an example of a mobile computer. Alternatively, the mobile computers could be any of: drones; autonomously or partly autonomously moving robots; autonomously or partly autonomously moving vehicles; or any combination of some or all of these. Fig. 2 shows the following steps:

210. Request(Dx): a client drone CD receives an attestation request from a drone Dx and has to decide whether to trust the latter or not (see Fig. 1 box a). The request contains, for example, any message from one drone to another. The attestation request complies with a particular protocol.

220. TrustAssessment(Dx): the attestation request is sent from the CD to a current leader drone LD asking to obtain a global assessment on the trustworthiness of the client drone Dx. In this example, the global assessment on the trustworthiness will be computed as the average value of all local assessments computed by the validating drones VD in the fleet or group of a state machine replication protocol members (see Fig. 1 box b). The global assessment comprises forwarding the request for a consensus based decision to the validating drones VD.

The Leader drone LD buffers any received attestation requests for a given time (such as at least 5 s, at least 10 s, at least 30 s, at least 60 s, at least 300 s, or at least 1000 s) and then proceeds.

230. CreateOrderedList(D1,...,Dx,...,Dn): The Leader drone LD collects all the requests for global assessment received by and from the different drones and creates an ordered list. For using Practical Byzantine Fault Tolerance, PBFT, permissioned block chain, each state machine replication protocol member authenticates itself.

240. Pre-prepare(): the ordered list is sent in broadcast to the client drone CD and to the validating drones VD. This message officially starts the PBFT protocol (see Fig. 1 box c).

Pre-prepare(), prepare(), commit() functions are in an example embodiment standard functions of the PBFT protocol.

250. ShareAssessment(): before proceeding with the PBFT protocol, the Client drone CD, Leader drone LD, and Validating drones VD must exchange their local assessment values for all the drones specified within the ordered list (Fig. 1 box d). This is done, e.g., by each drone sending a matrix as exemplified in Table 1 below.

**Table 1: example of matrix sent by a Drone during the ShareAssessment phase and containing the local assessments of all the drones specified within the TrustAssessment request sent by LD**

| Drones specified by LD | Dᵢ | ... | Dx | ... | Dj |
|---|---|---|---|---|---|
| Local assessment | 4 | ... | 7 | ... | 6 |

260. Prepare(): a standard PBFT-like message used to make sure that the Client drone CD, the Leader Drone LD, and the Validating drones VD receive the local assessment matrices and can continue with the consensus protocol.

270. Commit(): a step of a PBFT-like protocol in which the Client drone CD, the Leader drone LD, and the Validating drones VD reach (for each drone specified in the ordered list) an agreement on the trustworthiness of Dx. To this end, the Client drone CD, the Leader drone LD, and the Validating drones VD may apply a specific function on the local assessments received by the other drones (see Fig. 1 box e). The specific function is in an example embodiment an arithmetic or geometric average (see Table 2).

275. Compute ranking: As each state machine replication protocol member has the knowledge of every other member (or those that did reply), the members compute their ranking for each requestor and also they each compute and share the global assessment to each other.

Average is taken if a consensus is found, in which case the result comes from a set of rules based on various properties obtained by the PBFT protocol of the Dx. In an example embodiment, the average and consensus have different goals in the protocol. The consensus per-se may only regulate how to reach an agreement between attesters. The average may regulate on what to reach agreement. In an example embodiment, if the ruleset being used during the consensus is the average function and the consensus is reached (e.g., the majority of attesters agree on the computed average values), then the average may be taken as the global assessment.

An attestation protocol has mechanisms, such as Remote ATtestation ProcedureS (RATS) described in charter-ietf-rats-01, which may distribute details by a set of claims generated by suitable hardware. Forensic evidence is acquired using the attestation protocol by the validating drones and may include an initial registration on sending the attestation request. In an example embodiment, assessments (or attestations) of elements are made by an attester and generate a claim. The claim contains, e.g., a cryptographically verifiable (provenance and by implication identity of the element) assessment which is then passed on for matches against expected values through a rule mechanism. In an example embodiment, it is at this point we obtain one assessment of trust in that element.

**Table 2: example of using the average as the function to reach a global assessment on all the local assessments**

| Drones specified by LD | Dᵢ | ... | Dₓ | ... | Dⱼ |
|---|---|---|---|---|---|
| D1 local assessment | 4 | ... | 7 | ... | 6 |
| D2 local assessment | 8 | ... | 7 | ... | 4 |
| ... | ... | ... | ... | ... | ... |
| Di local assessment | 7 | ... | 3 | ... | 9 |
| ... | ... | ... | ... | ... | ... |
| Dn local assessment | 3 | ... | 8 | ... | 5 |
| Global assessment | Avg.(D1-Dn) | ... | Avg.(D1-Dn) | ... | Avg.(D1-Dn) |

8. UpdateGlobalTrust(): for each drone listed in the Leader drone LD request, drones update their global assessment values. In this context, updating refers to, for example, that new assessment is added or changed assessment replaces the old one.

9. AppendNewBlock(): the new agreed block is added to the local blockchain data structure by all drones (see Fig. 1 box f). This enables storing the results of the global assessment in a falsification resistant manner.

290. AppendNewBlock(): the Client drone CD, the Leader drone LD, and the Validating drones VD append a new block.

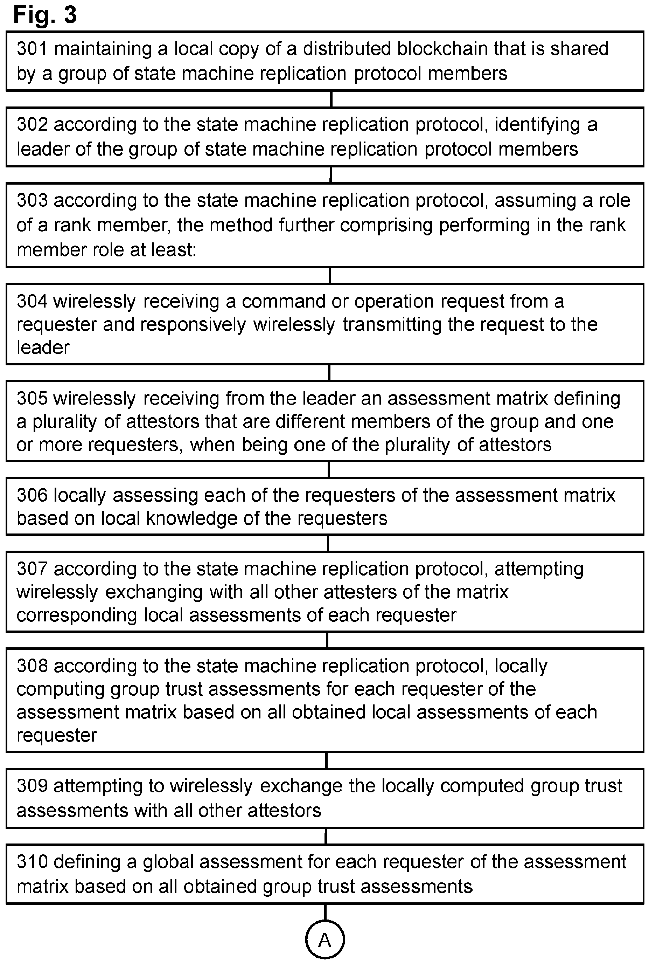

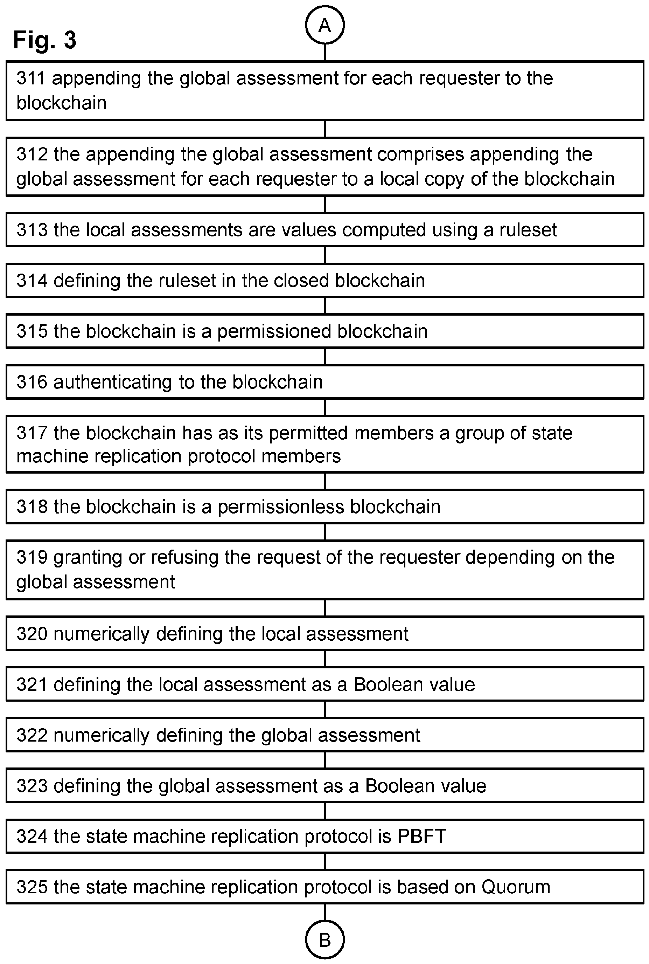

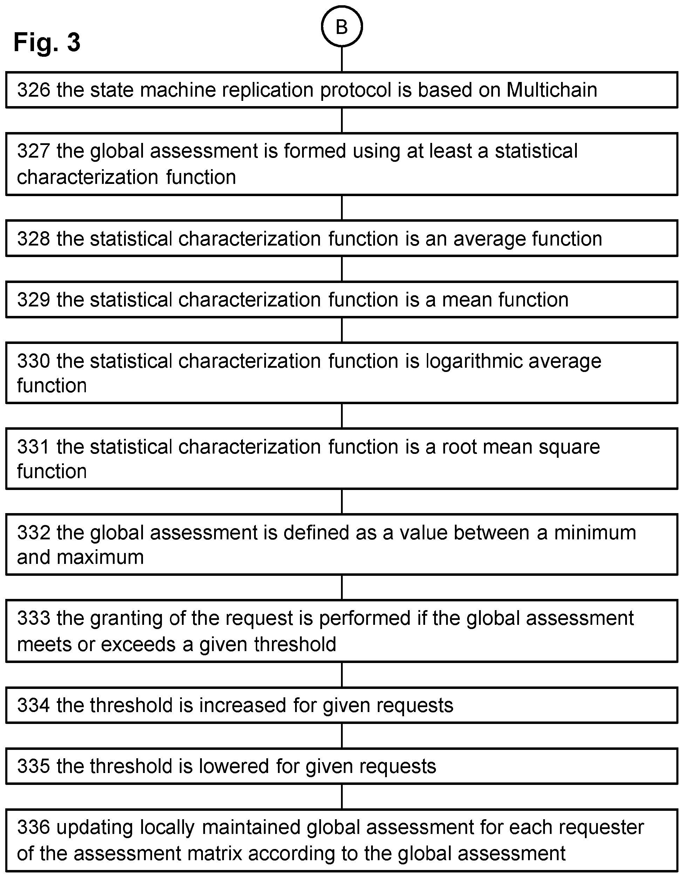

Fig. 3 shows a flow chart of various features of a process of different example embodiments in a mobile computer, comprising any of:
- 301: maintaining a local copy of a distributed blockchain that is shared by a group of state machine replication protocol members;
- 302: according to the state machine replication protocol, identifying a leader of the group of state machine replication protocol members;
- 303: according to the state machine replication protocol, assuming a role of a rank member, the method further comprising performing in the rank member role at least:
- 304: wirelessly receiving a command or operation request from a requester and responsively wirelessly transmitting the request to the leader;
- 305: wirelessly receiving from the leader an assessment matrix defining a plurality of attesters that are different members of the group and one or more requesters, when being one of the plurality of attesters;
- 306: locally assessing each of the requesters of the assessment matrix based on local knowledge of the requesters; wherein the local assessment may be based on any one or more of: a manufacturer of the requester; whether the requester has a same manufacturer with the attester; an operating system of the requester; whether the requester has a same operating system with the attester; one or more internal factors such as aforementioned operating system and / or wireless communication frequency band; and / or one or more external factors such as geographical location;
- 307: according to the state machine replication protocol, attempting wirelessly exchanging with all other attesters of the matrix corresponding local assessments of each requester;
- 308: according to the state machine replication protocol, locally computing group trust assessments for each requester of the assessment matrix based on all obtained local assessments of each requester, wherein the group assessments may refer to the content of a trust assessment matrix that may be shared during a state machine replication protocol such as the PBFT;
- 309: attempting to wirelessly exchange the locally computed group trust assessments with all other attesters;
- 310: defining a global assessment for each requester of the assessment matrix based on all obtained group trust assessments;
- 311: appending the global assessment for each requester to the blockchain;
- 312: the appending the global assessment comprises appending the global assessment for each requester to a local copy of the blockchain;
- 313: the local assessments are values computed using a ruleset;
- 314: defining the ruleset in the closed blockchain;
- 315: the blockchain is a permissioned blockchain;
- 316: authenticating to the blockchain;
- 317: the blockchain has as its permitted members a group of state machine replication protocol members;
- 318: the blockchain is a permissionless blockchain;
- 319: granting or refusing the request of the requester depending on the global assessment;
- 320: numerically defining the local assessment;
- 321: defining the local assessment as a Boolean value;
- 322: numerically defining the global assessment;
- 323: defining the global assessment as a Boolean value;
- 324: the state machine replication protocol is a practical byzantine fault tolerant protocol, PBFT;
- 325: the state machine replication protocol is based on Quorum;
- 326: the state machine replication protocol is based on Multichain;
- 327: the global assessment is formed using at least a statistical characterization function;
- 328: the statistical characterization function is an average function;
- 329: the statistical characterization function is a mean function;
- 330: the statistical characterization function is logarithmic average function;
- 331: the statistical characterization function is a root mean square function;
- 332: the global assessment is defined as a value between a minimum and maximum;
- 333: the granting of the request is performed if the global assessment meets or exceeds a given threshold, such as 50 % between the minimum and maximum or 2/3 of the range between the minimum and maximum;
- 334: the threshold is increased for given requests;
- 335: the threshold is lowered for given requests; and / or
- 336: updating locally maintained global assessment for each requester of the assessment matrix according to the global assessment.

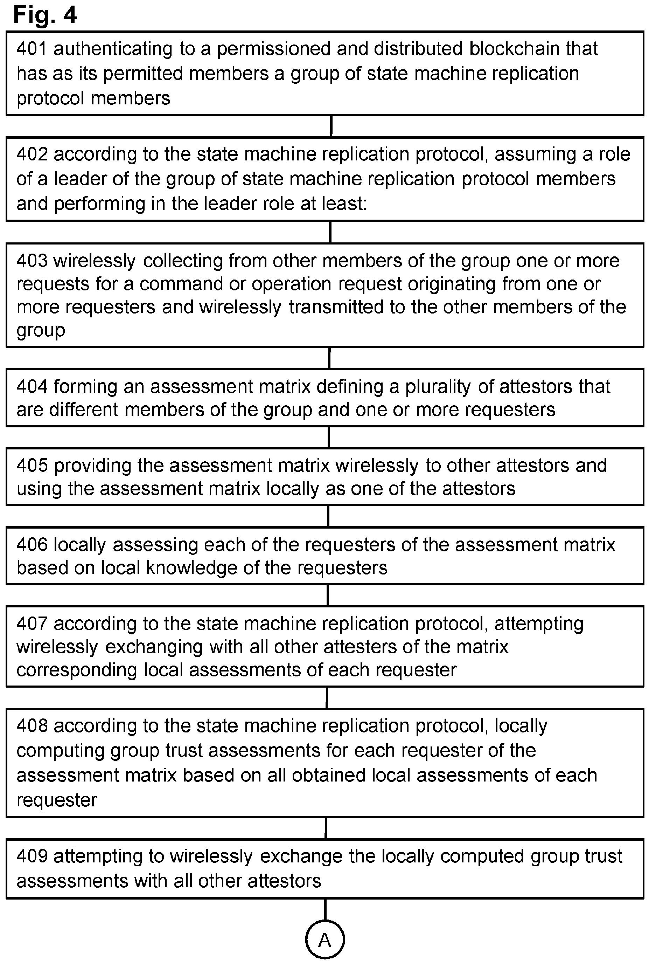

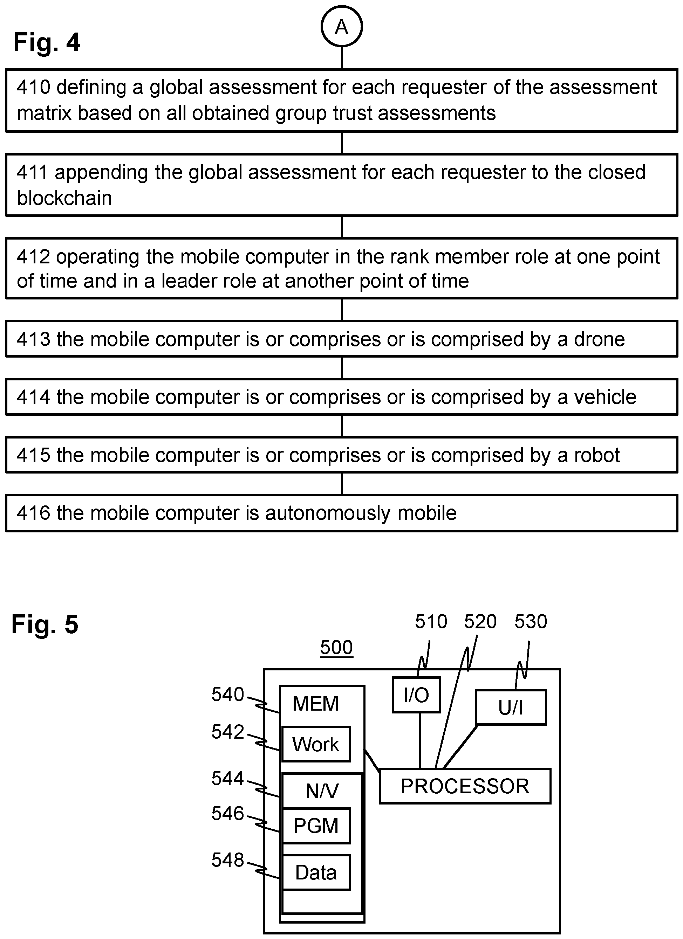

Fig.4 shows a flow chart of various features of a process of different example embodiments in a mobile computer, comprising:
- 401: authenticating to a permissioned and distributed blockchain that has as its permitted members a group of state machine replication protocol members;
- 402: according to the state machine replication protocol, assuming a role of a leader of the group of state machine replication protocol members and performing in the leader role at least:
- 403: wirelessly collecting from other members of the group one or more requests for a command or operation request originating from one or more requesters and wirelessly transmitted to the other members of the group;
- 404: forming an assessment matrix defining a plurality of attesters that are different members of the group and one or more requesters;
- 405: providing the assessment matrix wirelessly to other attesters and using the assessment matrix locally as one of the attesters;
- 406: locally assessing each of the requesters of the assessment matrix based on local knowledge of the requesters, e.g., using factors such as manufacturer; manufacturing country; operating system; firmware; membership of a trusted circle; updating state of software and / or hardware components; blacklisting; whitelisting;
- 407: according to the state machine replication protocol, attempting wirelessly exchanging with all other attesters of the matrix corresponding local assessments of each requester;
- 408: according to the state machine replication protocol, locally computing group trust assessments for each requester of the assessment matrix based on all obtained local assessments of each requester;
- 409: attempting to wirelessly exchange the locally computed group trust assessments with all other attesters;
- 410: defining a global assessment for each requester of the assessment matrix based on all obtained group trust assessments;
- 411: appending the global assessment for each requester to the closed blockchain;
- 412: operating the mobile computer in the rank member role at one point of time and in a leader role at another point of time;
- 413: the mobile computer is or comprises or is comprised by a drone;
- 414: the mobile computer is or comprises or is comprised by a vehicle;
- 415: the mobile computer is or comprises or is comprised by a robot; and / or
- 416: the mobile computer is autonomously mobile.

Fig. 5 shows a block diagram of an apparatus 500 according to an embodiment of the invention.

The apparatus 500 comprises a memory 540 including a persistent computer program code 550. The apparatus 500 further comprises a processor 520 for controlling the operation of the apparatus 500 using the computer program code 540, a communication unit 510 for communicating with other nodes. The communication unit 510 comprises, for example, a local area network (LAN) port; a wireless local area network (WLAN) unit; Bluetooth unit; cellular data communication unit; or satellite data communication unit. The processor 520 comprises, for example, any one or more of: a master control unit (MCU); a microprocessor; a digital signal processor (DSP); an application specific integrated circuit (ASIC); a field programmable gate array; and a microcontroller.

As used in this application, the term "circuitry" may refer to one or more or all of the following:
(a) hardware-only circuit implementations (such as implementations in only analogue and/or digital circuitry) and;
(b) combinations of hardware circuits and software, such as (as applicable):
   (i) a combination of analogue and/or digital hardware circuit(s) with software/firmware; and
   (ii) any portions of hardware processor(s) with software (including digital signal processor(s)), software, and memory(ies) that work together to cause an apparatus, such as a mobile phone or server, to perform various functions); and (c) hardware circuit(s) and or processor(s), such as a microprocessor(s) or a portion
   of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Without in any way limiting the scope, interpretation, or application of the claims appearing below, a technical effect of one or more of the example embodiments disclosed herein is that trust relationship of mobile computers can by dynamically updated without centralised control. Another technical effect of one or more of the example embodiments disclosed herein is that rogue mobile computer attacks can be mitigated based on group assessment. Another technical effect of one or more of the example embodiments disclosed herein is that local assessments can be efficiently shared with other attesters in matrices using a predefined structure. Another technical effect of one or more of the example embodiments disclosed herein is that resilience against communications interference or failures may be enhanced by sharing the local assessments with the matrices in relatively brief bursts. Another technical effect of one or more example embodiments disclosed herein is combining two kinds of assessments, local and global, which are different in nature (aka in the way they are computed) and thus provide different properties.

Embodiments of the present invention may be implemented in software, hardware, application logic or a combination of software, hardware, and application logic. In an example embodiment, the application logic, software, or an instruction set is maintained on any one of various conventional computer-readable media. In the context of this document, a "computer-readable medium" may be any non-transitory media or means that can contain, store, communicate, propagate, or transport the instructions for use by or in connection with an instruction execution system, apparatus, or device, such as a computer, with one example of a computer described and depicted in Fig. 5. A computer-readable medium may comprise a computer-readable storage medium that may be any media or means that can contain or store the instructions for use by or in connection with an instruction execution system, apparatus, or device, such as a computer.

If desired, the different functions discussed herein may be performed in a different order and/or concurrently with each other. Furthermore, if desired, one or more of the before-described functions may be optional or may be combined.

Although various aspects of the invention are set out in the independent claims, other aspects of the invention comprise other combinations of features from the described embodiments and/or the dependent claims with the features of the independent claims, and not solely the combinations explicitly set out in the claims.

It is also noted herein that while the foregoing describes example embodiments of the invention, these descriptions should not be viewed in a limiting sense. Rather, there are several variations and modifications which may be made without departing from the scope of the present invention as defined in the appended claims.

## Claims

1. A method in a mobile computer, comprising:
maintaining a local copy of a distributed blockchain that is shared by a group of state machine replication protocol members;
according to the state machine replication protocol, identifying a leader of the group of state machine replication protocol members;
according to the state machine replication protocol, assuming a role of a rank member, the method further comprising performing in the rank member role at least:
wirelessly receiving a command or operation request from a requester and responsively wirelessly transmitting the request to the leader;
wirelessly receiving from the leader an assessment matrix defining a plurality of attesters that are different members of the group and one or more requesters, when being one of the plurality of attesters
locally assessing each of the requesters of the assessment matrix based on local knowledge of the requesters;
according to the state machine replication protocol, attempting wirelessly exchanging with all other attesters of the matrix corresponding local assessments of each requester;
according to the state machine replication protocol, locally computing group trust assessments for each requester of the assessment matrix based on all obtained local assessments of each requester;
attempting to wirelessly exchange the locally computed group trust assessments with all other attesters;
defining a global assessment for each requester of the assessment matrix based on all obtained group trust assessments; and
appending the global assessment for each requester to the blockchain.

2. The method of claim 1, wherein the appending the global assessment comprises appending the global assessment for each requester to a local copy of the blockchain.

3. The method of claim 1 or 2, wherein the local assessments are values computed using a ruleset defined in the closed blockchain.

4. The method of any one of preceding claims, wherein the blockchain is a permissioned blockchain.

5. The method of any one of preceding claims, wherein the blockchain has as its permitted members a group of state machine replication protocol members.

6. The method of any one of preceding claims, wherein the state machine replication protocol is a practical byzantine fault tolerant protocol, PBFT.

7. The method of any one of preceding claims, wherein the global assessment is formed using at least a statistical characterization function.

8. The method of any one of preceding claims, further comprising updating locally maintained global assessment for each requester of the assessment matrix according to the global assessment.

9. A method in a mobile computer, comprising:
authenticating to a permissioned and distributed blockchain that has as its permitted members a group of state machine replication protocol members;
according to the state machine replication protocol, assuming a role of a leader of the group of state machine replication protocol members and performing in the leader role at least:
wirelessly collecting from other members of the group one or more requests for a command or operation request originating from one or more requesters and wirelessly transmitted to the other members of the group;
forming an assessment matrix defining a plurality of attesters that are different members of the group and one or more requesters;
providing the assessment matrix wirelessly to other attesters and using the assessment matrix locally as one of the attesters;
locally assessing each of the requesters of the assessment matrix based on local knowledge of the requesters;
according to the state machine replication protocol, attempting wirelessly exchanging with all other attesters of the matrix corresponding local assessments of each requester;
according to the state machine replication protocol, locally computing group trust assessments for each requester of the assessment matrix based on all obtained local assessments of each requester;
attempting to wirelessly exchange the locally computed group trust assessments with all other attesters;
defining a global assessment for each requester of the assessment matrix based on all obtained group trust assessments; and
appending the global assessment for each requester to the closed blockchain.

10. An apparatus, wherein:
the apparatus comprising a memory and a processor that are configured to cause the apparatus to perform the method of any one of preceding claims; and
the apparatus is a mobile computer.

11. The method of any one of claims 1 to 9 further comprising, or the apparatus of claim 10 further configured to, operating the mobile computer in the rank member role at one point of time and in a leader role at another point of time.

12. The method of any one of claims 1 to 9 or the apparatus of claim 10, wherein the mobile computer is, or comprises, or is comprised by a drone; a vehicle; and / or a robot.

13. The method of any one of claims 1 to 9 or the apparatus of claim 10, wherein the mobile computer is autonomously mobile.

14. A computer program comprising computer executable program code configured to execute the method of any one of claims 1 to 9 when executed by a computer.

15. A non-transitory memory medium comprising the computer program of claim 14.
